# EUROPEAN PATENT APPLICATION

(11) **EP 4 783 136 A1**
(43) Date of publication of application: **29.07.2026**
(21) Application number: 26153169.3
(22) Date of filing: 21.01.2026
(51) Int. Cl.: G07C 5/00, G07C 5/08

(54) **SERVER, SYSTEM, INFORMATION PROCESSING METHOD, AND COMPUTER PROGRAM**

(30) Priority: 24.01.2025 JP 2025010912
(71) Applicant: TOYOTA JIDOSHA KABUSHIKI KAISHA, Toyota-shi, Aichi-ken 471 8571 (JP)
(72) Inventor: Yamaguchi, Yohsuke, Toyota-shi, 471-8571 (JP); Hayashi, Tatsuhiro, Toyota-shi, 471-8571 (JP)
(74) Representative: J A Kemp LLP

(57) **Abstract**

A server 5 that can communicate with a vehicle 2 includes a transmission control unit 533 configured to control transmission of data acquired previously in the vehicle from the vehicle to the server, based on whether or not a user of the vehicle has given consent to providing data to outside at a time of acquiring the data in the vehicle, with reference to information received from the vehicle.

## Description

### FIELD

The present disclosure relates to a sever, a system, an information processing method, and a computer program.

### BACKGROUND

In the related art, in providing data, acquired by a vehicle while the vehicle is traveling, to an external apparatus, it is known that the data is transmitted to the external apparatus when a driver gives consent, and the data is not transmitted to the external apparatus when the driver does not give consent (JP 2024-044087 A ).

In particular, in an information processing apparatus described in JP 2024-044087 A, the presence or absence of consent to data transmission is stored in a storage unit of a vehicle for each driver and each data type, and only the data with the consent is transmitted to an external apparatus.

In the information processing apparatus described in JP 2024-044087 A, the current presence or absence of consent to data transmission is stored for each driver and each data type. Thus, once the driver gives consent, all previously acquired data may be provided to the external apparatus. That is, even if there is a period in which the driver did not give consent to providing data, there is a possibility that data acquired during the period may also be provided to the external apparatus.

In view of the above problems, an object of the present disclosure is to prevent past data from being provided to the outside when a user did not give consent to providing the data to the outside.

### SUMMARY

The present disclosure includes the following aspects.
(1) A server that can communicate with a vehicle, the server comprising a transmission control unit configured to control transmission of data acquired previously in the vehicle from the vehicle to the server, based on whether or not a user of the vehicle has given consent to providing data to outside at a time of acquiring the data in the vehicle, with reference to information received from the vehicle.
(2) The server according to above (1), further comprising a storage control unit configured to cause a storage unit to store consent information indicating whether or not the user of the vehicle has given consent to providing data acquired in the vehicle to outside previously based on the information received from the vehicle, wherein
   the transmission control unit controls transmission of the data acquired previously in the vehicle from the vehicle to the server based on the consent information.
(3) The server according to above (2), wherein the consent information includes consent period information regarding a period in which the user of the vehicle has given consent to providing data acquired in the vehicle to outside.
(4) The server according to any one of above (1) to (3), wherein the transmission control unit controls transmission of the data acquired previously in the vehicle from the vehicle to the server when a data read condition from the vehicle is satisfied.
(5) The server according to above (4), wherein the transmission control unit controls transmission of the data from the vehicle to the server, based on whether or not the user of the vehicle gives consent to providing data to outside when the data read condition is satisfied, in addition to whether or not the user of the vehicle has given consent to providing data to outside at a time of acquiring the data in the vehicle.
(6) The server according to any one of above (1) to (5), wherein when the user of the vehicle has not given consent to providing data to outside at a time of acquiring the data, the transmission control unit does not transmit regulated data from the vehicle to the server, the regulated data being at least a part of the data.
(7) The server according to any one of above (1) to (5), wherein when the user of the vehicle has not given consent to providing data to outside at a time of acquiring the data, the transmission control unit processes regulated data to reduce its information accuracy and then transmits the regulated data from the vehicle to the server, the regulated data being at least a part of the data.
(8) The server according to above (6) or (7), wherein when the user of the vehicle has given consent to providing data to outside at a time of acquiring the data, the transmission control unit transmits the data including the regulated data from the vehicle to the server.
(9) The server according to above (6) or (7), wherein even though the user of the vehicle has given consent to providing data to outside at a time of acquiring the data, when the user of the vehicle does not give consent to providing data to outside when a data read condition from the vehicle is satisfied, the transmission control unit does not transmit the regulated data from the vehicle to the server.
(10) The server according to above (6) or (7), wherein even though the user of the vehicle has given consent to providing data to outside at a time of acquiring the data, when the user of the vehicle does not give consent to providing data to outside when a data read condition from the vehicle is satisfied, the transmission control unit processes the regulated data to reduce its information accuracy and then transmits the regulated data from the vehicle to the server.
(11) The server according to above (9) or (10), wherein when the user of the vehicle gives consent to providing data to outside at a time of acquiring the data and the user of the vehicle gives consent to providing data to outside when the data read condition from the vehicle is satisfied, the transmission control unit transmits the data including the regulated data from the vehicle to the server.
(12) The server according to above (7) or (10), wherein the processing to reduce the information accuracy includes anonymizing privacy information included in the regulated data.
(13) The server according to any one of above (6) to (12), wherein the regulated data includes privacy information of the user of the vehicle or people around the vehicle at the time of acquiring the data.
(14) The server according to any one of above (4), (5) and (9) to (11), wherein the data read condition includes a condition that is periodically satisfied.
(15) The sever according to any one of above (4), (5), (9) to (11) and (14), wherein the data read condition includes a condition that is satisfied when a predetermined incident occurs in the vehicle.
(16) A system comprising:
   the server according to above (1) to (15); and
   a vehicle that can communicate with the server, wherein
   the vehicle includes an information management unit configured to transmit, to the server, information on whether or not a user of the vehicle gives consent to providing data to outside.
(17) The system according to above (16), wherein the information management unit is configured, when a consent condition indicating whether or not the user of the vehicle gives consent to providing data to outside is changed, to transmit information indicating that the consent condition has been changed to the server.
(18) A system comprising:
   the server according to above (3); and
   a vehicle that can communicate with the server, wherein
   the vehicle comprises:
   a vehicle storage control unit configured, when the data acquired at the vehicle is stored to a vehicle storage unit, to cause a vehicle storage unit to store data indicating a time when the data is acquired as well; and
   a data transmission unit configured to transmit data indicating the time at which the data is acquired, and
   the transmission control unit is configured to determine whether or not the user of the vehicle has given consent to providing the date to outside at the time of acquiring the data in the vehicle, based on the consent period information and the data indicating the time at which the data is transmitted.
(19) An information processing method to be implemented in a server that can communicate with a vehicle, the method comprising controlling transmission of data acquired previously in the vehicle from the vehicle to the server based on whether or not a user of the vehicle has given consent to providing data to outside at a time of acquiring the data in the vehicle, with reference to information received from the vehicle.
(20) A computer program to be executed in a server that can communicate with a vehicle, the program being configured to cause a computer of the server to: control transmission of data acquired previously in the vehicle from the vehicle to the server based on whether or not a user of the vehicle has given consent to providing data to outside at a time of acquiring the data in the vehicle, with reference to information received from the vehicle.

### BRIEF DESCRIPTION OF DRAWINGS

FIG. 1 is a schematic configuration diagram of a data collection system.
FIG. 2 is a schematic configuration diagram of a vehicle.
FIG. 3 is a configuration diagram illustrating a configuration of an ECU.
FIG. 4 is a diagram illustrating an example of accumulated data stored in a vehicle storage unit by a vehicle storage control unit.
FIG. 5 is a configuration diagram illustrating a configuration of a server.
FIG. 6 is an example of consent period information stored in a server storage unit by a consent information storage control unit.
FIG. 7 is a flowchart illustrating a flow of change notification processing.
FIG. 8 is a flowchart illustrating a flow of vehicle storage processing.
FIG. 9 is an operation sequence diagram related to communication between the vehicle and the server.
FIG. 10 is a flowchart illustrating a flow of transmission control processing.
FIG. 11 is a flowchart similar to FIG. 10, illustrating the flow of the transmission control processing according to a modified example.
FIG. 12 is a diagram similar to FIG. 4, illustrating an example of accumulated data stored in a vehicle storage unit by a vehicle storage control unit in a second embodiment.
FIG. 13 is a flowchart similar to FIG. 10, illustrating a flow of transmission control processing according to the second embodiment.

### First Embodiment

### Configuration of data collection system

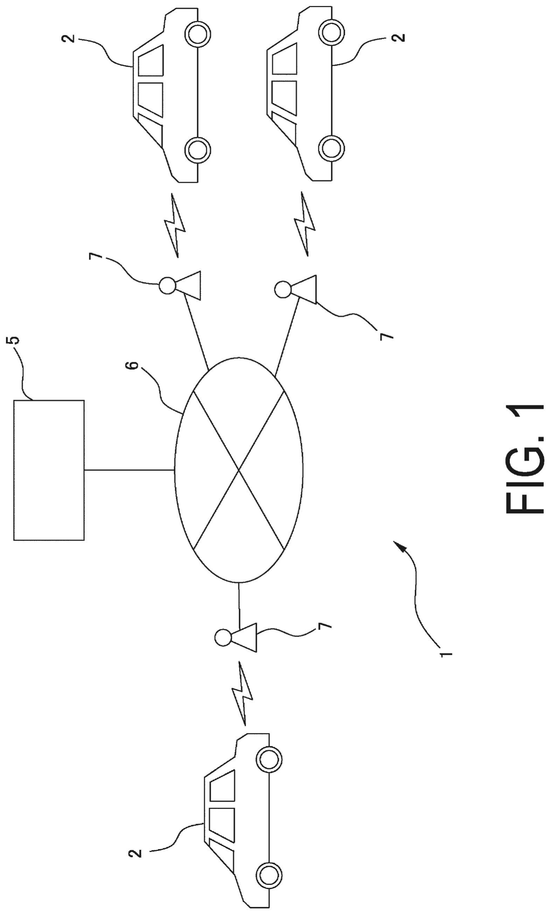

First, a configuration of a data collection system 1 according to a first embodiment will be described with reference to FIG. 1. FIG. 1 is a schematic configuration diagram of the data collection system 1 according to the first embodiment. The data collection system 1 collects data acquired in a vehicle 2 in a server 5.

As illustrated in FIG. 1, the data collection system 1 includes a plurality of communicable vehicles 2 and the server 5. The server 5 is an example of an external apparatus provided outside the vehicle 2. Each of the plurality of vehicles 2 and the server 5 are configured to be able to communicate with each other via a communication network 6 including an optical communication line and the like, and a wireless base station 7 connected to the communication network 6 via a gateway (not illustrated). As communication between the vehicle 2 and the wireless base station 7, various types of wide-area wireless communication having a long communication distance can be used. Specifically, as this communication, for example, communication conforming to a given communication standard such as 4G, LTE, 5G, or WiMAX formulated by 3GPP or IEEE (both are registered trademarks) is used.

In the present embodiment, the data collection system 1 collects, from a large number of vehicles 2, data obtained during traveling of each of the vehicles 2. The collected data is used as big data, and is used to provide various services. Specifically, the collected data is used, for example, as teaching data for automatic driving, or is used to analyze driving of the large number of vehicles 2.

### Configuration of Vehicle

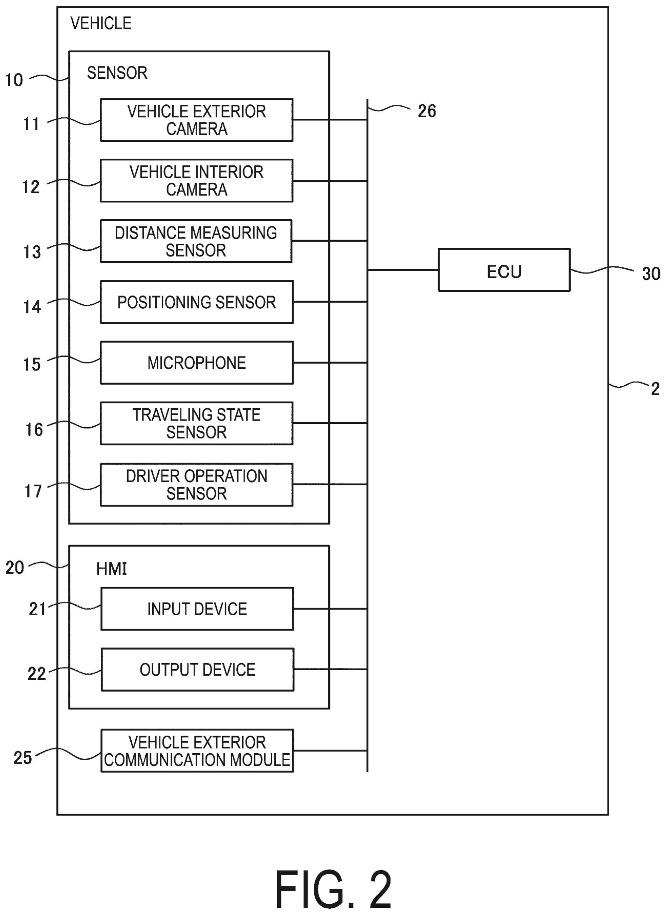

Next, a configuration of the vehicle 2 will be described with reference to FIG. 2. Each of the vehicles 2 may be a vehicle that is operated by a driver and manually driven, may be a vehicle for which driving assistance can be provided by an ECU of the vehicle 2, or may be a vehicle that is autonomously driven by the ECU of the vehicle 2.

In the present embodiment, when a given incident occurs, the vehicle 2 stores data detected by a sensor of the vehicle 2, and transmits at least a part of the stored data to the server 5 based on a request from the server 5.

FIG. 2 is a schematic configuration diagram of the vehicle 2. In the present embodiment, the vehicle 2 includes a plurality of sensors 10, a human machine interface (hereinafter, referred to as "HMI") 20, a vehicle exterior communication module 25, and an electronic control unit (hereinafter referred to as "ECU") 30. These components of the vehicle 2 are communicably connected to each other via an in-vehicle network 26 conforming to a standard such as a controller area network (CAN), or are directly connected to each other via a signal line.

The sensor 10 detects various types of information related to the vehicle 2 (including information related to an occupant in the vehicle 2 and information related to an environment or a circumstance around the vehicle 2), and generates data corresponding to the detected information. The sensor 10 includes, for example, a vehicle exterior camera 11, a vehicle interior camera 12, a distance measuring sensor 13, a positioning sensor 14, a microphone 15, a traveling state sensor 16, and a driver operation sensor 17.

The vehicle exterior camera 11 is a sensor that images surroundings of the vehicle 2 and generates data representing an image of the surroundings of the vehicle 2. The vehicle exterior camera 11 captures an image of the front of the vehicle 2 in the present embodiment. The vehicle interior camera 12 is a sensor that images the inside of the vehicle 2 and generates data representing an image of the inside of the vehicle 2. In the present embodiment, the vehicle interior camera 12 captures an image of a user of the vehicle 2 (the occupant in the vehicle 2, particularly, the driver). The distance measuring sensor 13 is a sensor that measures a distance to an object present around the vehicle 2, particularly an object present in front of the vehicle 2, and generates data representing the distance to the object. The distance measuring sensor 13 is, for example, a radar such as a millimeter-wave radar, a LiDAR, or a sonar.

The positioning sensor 14 is a sensor that measures the own position of the vehicle 2 and generates data representing the own position of the vehicle 2. The positioning sensor 14 is, for example, a GNSS receiver. The microphone 15 is a sensor that detects a voice and generates data representing the voice. The microphone 15 detects a voice inside the vehicle 2 or outside the vehicle 2.

The traveling state sensor 16 is a sensor that detects a traveling state of the vehicle 2 and generates data representing the traveling state. The traveling state sensor 16 detects, for example, a speed and an acceleration of the vehicle 2, and a change rate (yaw rate) of a yaw angle at the time of turning of the vehicle 2. The driver operation sensor 17 is a sensor that detects an operating status of an operation device of the vehicle 2 (for example, an accelerator pedal, a brake pedal, and a steering wheel) by the driver, and generates data that represents the operating status of the operation device. The driver operation sensor 17 includes, for example, an accelerator sensor that detects a depression amount of the accelerator pedal, a brake sensor that detects a depression amount of the brake pedal, and a steering sensor that detects a steering angle of the steering wheel.

The sensor 10 generates data every predetermined period, and outputs the generated data to the ECU 30 every predetermined period via the in-vehicle network 26. As described above, in the vehicle 2, various data is acquired by the sensor 10.

The sensor 10 may include other sensors that detect various types of information related to the vehicle 2. For example, the sensor 10 may include a grip sensor that detects whether or not the driver grips a steering wheel, a rotational speed sensor that detects a rotational speed of a prime mover (engine or electric motor), an air pressure sensor that detects an air pressure of tires of the vehicle 2, and a wheel speed sensor that detects a speed of wheels of the vehicle 2.

The HMI 20 is a user interface for exchanging information between the ECU 30 of the vehicle 2 and an occupant in the vehicle 2. The HMI 20 includes an input device 21 that receives an input from the occupant in the vehicle 2, and an output device 22 that gives notification to the occupant in the vehicle 2. The input device 21 is a device that receives a physical operation or a voice operation by the occupant as an input, and includes, for example, at least one of a touch panel, a switch, a button, or the microphone 15. On the other hand, the output device 22 is a device that gives notification to the occupant through the occupant's five senses (for example, visual sense, auditory sense, and tactile sense), and includes, for example, at least one of a display device (for example, a liquid crystal display, a head-up display, or a warning lamp), a speaker, or a vibration unit.

The HMI 20 transmits the input data received from the occupant via the input device 21 to the ECU 30 via the in-vehicle network 26. Further, via the output device 22, the HMI 20 notifies the occupant of information corresponding to a signal received from the ECU 30 via the in-vehicle network 26.

The vehicle exterior communication module 25 communicates with a device outside the vehicle. The vehicle exterior communication module 25 is a device that wirelessly communicates with the wireless base station 7 in conformity with a predetermined mobile communication standard. For example, the vehicle exterior communication module 25 transmits data generated by each of the sensors 10 of the vehicle 2 to the server 5 via the wireless base station 7. Furthermore, the vehicle exterior communication module 25 receives data transmitted from the server 5 via the wireless base station 7, and transmits the data to the ECU 30.

### Configuration of ECU

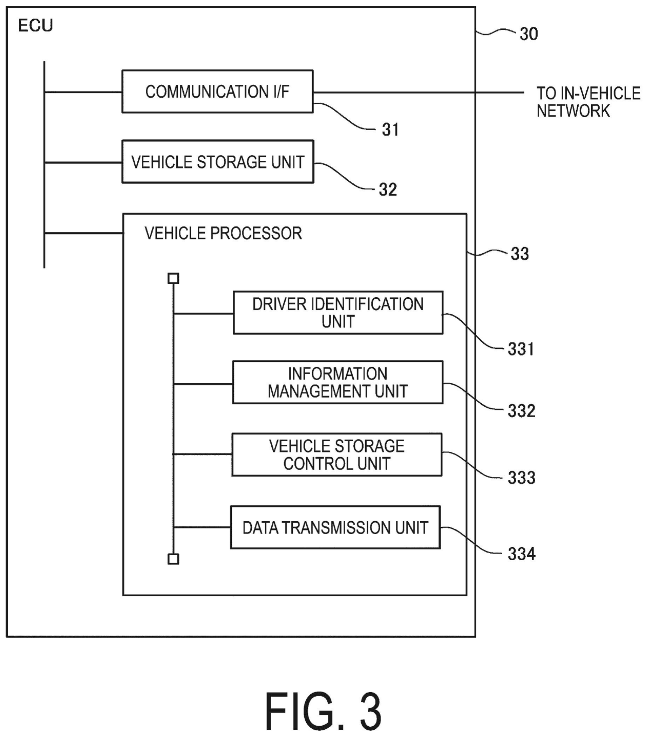

Next, the configuration and operation of the ECU 30 will be described with reference to FIG. 3. FIG. 3 is a configuration diagram illustrating the configuration of the ECU 30. In the present embodiment, the ECU 30 transmits at least a part of the data generated by the sensor 10 of the vehicle 2 to the server 5. In the example illustrated in FIGS. 2 and 3, the vehicle 2 includes a single ECU 30, and may include a plurality of ECUs separate for each of the functions. As illustrated in FIG. 3, the ECU 30 includes a communication interface 31, a vehicle storage unit 32, and a vehicle processor 33. The communication interface 31, the vehicle storage unit 32, and the vehicle processor 33 may be separate circuits, or may be formed into a single integrated circuit.

The communication interface 31 includes a circuit for connecting the ECU 30 to the in-vehicle network 26 or the like. The communication interface 31 transmits signals received from the sensor 10 and the input device 21 of the HMI 20 to the vehicle processor 33. The communication interface 31 transmits the signal received from the vehicle processor 33 to the vehicle exterior communication module 25 and the output device 22 of the HMI 20.

The vehicle storage unit 32 is a device that stores data, and is a non-transitory storage medium. The vehicle storage unit 32 includes, for example, at least one of a volatile semiconductor memory (for example, RAM), a nonvolatile semiconductor memory (for example, ROM), a hard disk drive (HDD), or a solid state drive (SSD). The vehicle storage unit 32 stores a computer program to be executed by the vehicle processor 33. In addition, the vehicle storage unit 32 stores various data such as data including identification information on the vehicle 2, and data received from the sensor 10.

The vehicle processor 33 includes one or a plurality of central processing units (CPUs) and peripheral circuits thereof. The vehicle processor 33 may further include a logic operation unit, an arithmetic operation unit, or another operation circuit such as a graphics processor unit. The vehicle processor 33 executes the computer program stored in the vehicle storage unit 32.

As illustrated in FIG. 3, the vehicle processor 33 includes a driver identification unit 331, an information management unit 332, a vehicle storage control unit 333, and a data transmission unit 334. These units included in the vehicle processor 33 are, for example, functional modules implemented by the computer program running on the vehicle processor 33. Alternatively, the units included in the vehicle processor 33 may be mounted to the ECU 30 as independent integrated circuits, microprocessors, or firmware.

### Driver identification unit

The driver identification unit 331 identifies the user of the vehicle 2, particularly the driver of the vehicle 2. In the present embodiment, the driver identification unit 331 identifies the driver based on an image generated by the vehicle interior camera 12, in particular, a captured image of the driver. Specifically, for example, the driver identification unit 331 extracts a feature amount of the current driver by inputting the captured image of the driver to an encoder. Then, when a distance between the feature amount extracted in this manner and the feature amount extracted from an image of the driver captured previously is equal to or less than a certain distance, the driver identification unit 331 identifies both the drivers as the same driver.

When the driver identification unit 331 identifies the driver of the vehicle 2, the driver identification unit 331 transmits information on the identified current driver of the vehicle 2 to the information management unit 332.

### Consent information management unit

The information management unit 332 transmits information relating to whether or not the user of the vehicle 2 currently gives consent to providing data acquired in the vehicle 2 to the outside. By transmitting the information relating to the consent by the user of the vehicle 2 to the server 5 in this manner, the sever can properly ascertain whether the user gives consent to providing the data to the outside.

In the present embodiment, the information management unit 332 inquires of the user of the vehicle 2 whether or not to give consent to providing the data to the outside via the output device 22 of the HMI 20 at a given timing. The inquiry may be performed, for example, by causing the display device of the vehicle 2 to display the inquiry, or may be performed by causing the speaker to output a voice expressing the inquiry. The information management unit 332 makes the inquiry, for example, when the vehicle 2 is activated (for example, when an ignition switch is turned on) or when the driver sits on a driver's seat of the vehicle 2. The information management unit 332 may make the inquiry at another timing, for example, when a given incident has occurred.

The information management unit 332 receives an input of the information indicating whether or not to give consent to providing the data to the outside from the user of the vehicle 2. The information is input from the user via the input device 21 of the HMI 20. For example, in response to the inquiry displayed on the display device of the vehicle 2, the user operates the touch panel or the button to input the information. Alternatively, the information is input by the user operating the input device at a timing independently of the inquiry to the user.

When the information relating to consent is input from the user of the vehicle 2, the information management unit 332 holds the input information relating to consent. Therefore, in a case where there is an input indicating that the user of the vehicle 2 gives consent to providing the data to the outside, then, information indicating that the user gives the consent is held. Thereafter, in a case where there is an input indicating that the user of the vehicle 2 does not give consent to providing the data to the outside, then, information indicating that the user does not give the consent is held.

In particular, in the present embodiment, the information management unit 332 holds the input information relating to consent for each user. Specifically, the information management unit 332 holds information relating to consent for each driver identified by the driver identification unit 331. However, the information management unit 332 may hold the input information relating to consent independently of the user. In this case, the information management unit 332 inquires about whether or not to give consent to providing the data to the outside every time the user changes. In this case, the vehicle processor 33 may not include the driver identification unit 331.

In addition, when a consent state indicating whether or not the user of the vehicle 2 gives consent to providing the data to the outside is changed, the information management unit 332 transmits information indicating that the consent state has been changed to the server 5. Accordingly, it is possible to properly transmit the information on the consent state of the user to the server 5 while reducing the communication traffic from the vehicle 2 to the server 5.

For example, when the consent state has been changed, the information management unit 332 transmits information related to the consent of the user after the change to the server 5. Specifically, for example, in a case where the information management unit 332 holds information indicating that a certain user gives consent to providing data to the outside, when an input indicating that the user does not give consent to providing the data to the outside is received, the information management unit 332 transmits information indicating that the consent state of the user has changed from the consenting state to a non-consent state to the server 5.

### Vehicle storage control unit

The vehicle storage control unit 333 controls storage of data, acquired in the vehicle 2, in the vehicle storage unit 32. In the present embodiment, the vehicle storage control unit 333 controls data to be stored in the vehicle storage unit 32 among data generated by the sensor 10 of the vehicle 2.

In the present embodiment, when a predetermined incident has occurred, the vehicle storage control unit 333 stores the data generated by the sensor 10 before and after the occurrence of the incident in the vehicle storage unit 32. The predetermined incident includes, for example, sudden acceleration with a predetermined acceleration or higher, sudden braking with a predetermined braking force or more, sudden steering at a predetermined steering speed or higher, a sudden change in physical condition of the driver, cancellation of a driving assistance system when the driving assistance is provided for the vehicle 2, and depression of an SOS switch when the vehicle 2 includes the SOS switch. The predetermined incident may include other circumstances in addition to or instead of these circumstances above.

Therefore, for example, when an acceleration of the vehicle 2 which is a predetermined acceleration or higher is detected by the traveling state sensor 16, the vehicle storage control unit 333 stores the data generated by the sensor 10 before and after the acceleration is detected in the vehicle storage unit 32. As described above, storing the data in the vehicle storage unit 32 only when a specific incident has occurred makes it possible to obtain necessary data, while maintaining a small amount of the data stored in the vehicle storage unit 32.

In particular, in the present embodiment, when a predetermined incident has occurred, the vehicle storage control unit 333 stores, in the vehicle storage unit 32, the data representing images generated by the vehicle exterior camera 11 and the vehicle interior camera 12 before and after the occurrence of the incident, the data representing the own position of the vehicle 2 generated by the positioning sensor 14, and the data representing the voice generated by the microphone 15. In addition, the vehicle storage control unit 333 stores the data including the identification information on the vehicle 2 in the vehicle storage unit 32 every time a predetermined incident occurs.

In addition, in the present embodiment, when a predetermined incident has occurred, the vehicle storage control unit 333 stores, in the vehicle storage unit 32, the data representing the traveling state generated by the traveling state sensor 16, and the data representing the operating status of the operation device generated by the driver operation sensor 17 before and after the occurrence of the incident.

In addition, in the present embodiment, in addition to the data acquired in the vehicle 2, the vehicle storage control unit 333 stores data representing a time when the data has been acquired in the vehicle storage unit 32. As a result, the sever 5 can determine whether or not the user has given consent with regard to each piece of data acquired previously at the time of the vehicle 2 acquiring the data.

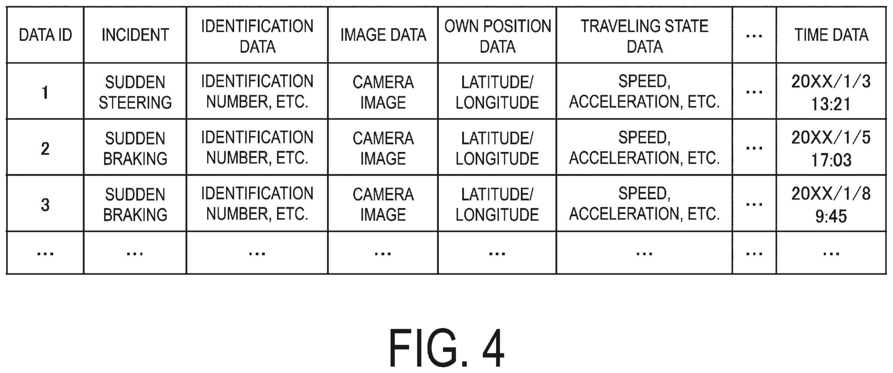

FIG. 4 is a diagram illustrating an example of accumulated data stored in the vehicle storage unit 32 by the vehicle storage control unit 333. As illustrated in FIG. 4, various types of data acquired before and after occurrence of one incident are stored in association with one data ID. For example, in the example illustrated in FIG. 4, the accumulated data whose data ID is 1 includes data generated by various sensors 10 when the traveling state sensor 16 detects sudden steering at a predetermined steering speed or higher.

As illustrated in FIG. 4, one piece of accumulated data includes the data including the identification information on the vehicle 2 (identification data), the data representing an image (image data), the data representing the own position of the vehicle 2 (own position data), and the data representing the traveling state (traveling state data). The one piece of accumulated data includes other data acquired by the sensors 10, such as the data representing a voice, and the data representing an operating status of the operation device. In addition, the one piece of accumulated data includes the data representing the time at which the data has been acquired (time data).

In the above embodiment, when a predetermined incident has occurred, the vehicle storage control unit 333 stores the data and the like generated by the sensors 10 before and after the occurrence of the incident in the vehicle storage unit 32. However, the vehicle storage control unit 333 may store the data and the like generated by the sensors 10 in the vehicle storage unit 32 regardless of the incident. For example, the vehicle storage control unit 333 may always store the data and the like generated by the sensors 10 in the vehicle storage unit 32, or may store the data and the like generated by the sensors 10 in the vehicle storage unit 32 when a given condition set in advance is satisfied.

### Data transmission unit

The data transmission unit 334 transmits data stored in the vehicle storage unit 32 of the vehicle 2 to the server 5. In the present embodiment, when the data transmission unit 334 receives a data read request signal from the server 5, the data transmission unit 334 transmits, to the server 5, data representing the time at which each of a plurality of pieces of accumulated data stored in the vehicle storage unit 32 has been acquired. For example, when the accumulated data is stored in the vehicle storage unit 32 illustrated in FIG. 4, the vehicle storage unit 32 transmits the time data whose data IDs are 1, 2, 3, ... to the server 5. As a result, the server 5 can easily determine whether or not the user of the vehicle 2 has given consent to providing the data to the outside when the data has been acquired, by referring to the data representing the time when each accumulated data has been acquired together with consent period information to be described later.

The data read request signal may include information on the type of data requested to be read. For example, the data read request signal may include information representing a request to read data related to a specific incident. Therefore, for example, in a case where the data read request signal at the time of occurrence of a sudden braking incident is received, the data transmission unit 334 transmits the time data of the accumulated data whose data IDs are 2 and 3 to the server 5, and does not transmit the time data of the accumulated data whose data ID is 1 to the server 5 in the example illustrated in FIG. 4.

When the data transmission unit 334 receives a signal related to an instruction to transmit specific accumulated data from the server 5 (in particular, the transmission control unit 533 of the server 5 to be described later), the data transmission unit 334 transmits the specific accumulated data to the server 5 according to the instruction.

### Configuration of Server

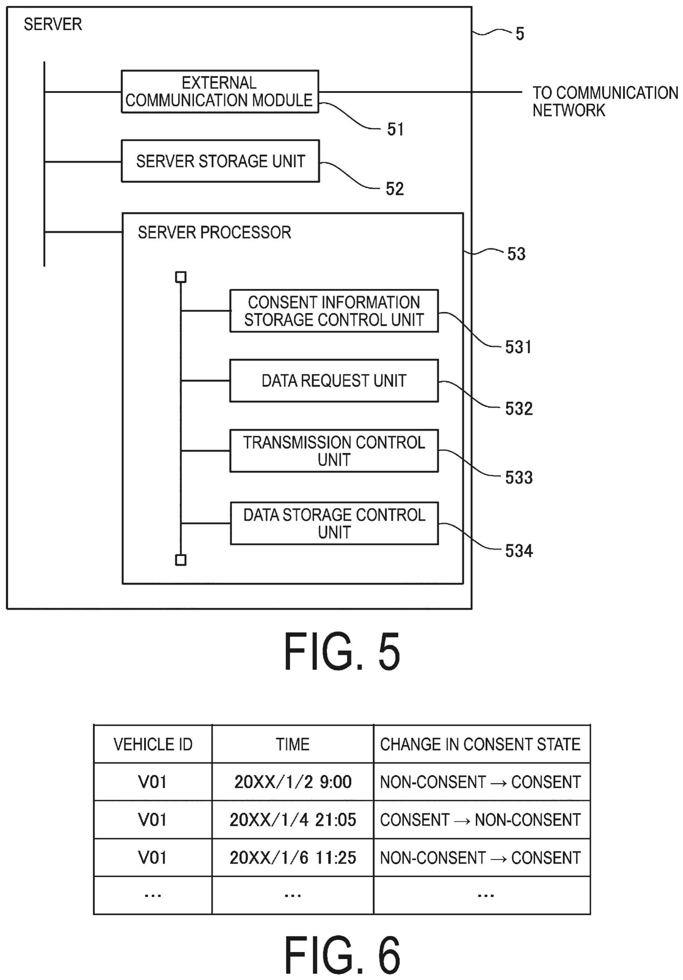

Next, a configuration of the server 5 will be described with reference to FIG. 5. FIG. 5 is a configuration diagram illustrating the configuration of the server 5. The server 5 controls transmission of data to the server 5 from a plurality of the vehicles 2 that can communicate with the server 5 via the communication network 6. In addition, the server 5 receives the data acquired in the vehicle 2 from the plurality of vehicles 2 that can communicate with the server 5 via the communication network 6. The data received by the server 5 in this manner is used as the teaching data for automatic driving, or used to analyze driving of a large number of vehicles 2.

In the present embodiment, the server 5 includes an external communication module 51, a server storage unit 52, and a server processor 53. The external communication module 51 and the server storage unit 52 are connected to the server processor 53 via a signal line. The server 5 may further include an input device such as a keyboard and a mouse, and an output device such as a display and a speaker. In addition, the server 5 may be constituted by a plurality of computers.

The external communication module 51 communicates with a device outside the server 5. The external communication module 51 includes an interface circuit for connecting the server 5 to the communication network 6. The external communication module 51 is configured to be able to communicate with the vehicle 2 via the communication network 6 and the wireless base station 7.

The server storage unit 52 is a device that stores data and is a non-transitory storage medium. The server storage unit 52 includes at least one of a volatile semiconductor memory, a nonvolatile semiconductor memory, an HDD, or an SSD, for example. The server storage unit 52 stores a computer program to be executed by the server processor 53. In addition, the server storage unit 52 stores various data including data received from the vehicle 2.

The server processor 53 includes one or a plurality of CPUs and a peripheral circuit thereof. The server processor 53 may further include a logic operation unit, an arithmetic operation unit, or another operation circuit such as a graphics processor unit. The server processor 53 executes the computer program stored in the server storage unit 52.

As illustrated in FIG. 5, the server processor 53 includes a consent information storage control unit 531, a data request unit 532, a transmission control unit 533, and a data storage control unit 534. These units included in the server processor 53 are, for example, functional modules to be implemented by the computer program running on the server processor 53.

The consent information storage control unit 531 causes the server storage unit 52 to store consent information indicating whether or not the user of the vehicle 2 has given consent to providing the data acquired in the vehicle 2 to the outside previously based on the information received from the vehicle 2. In the present embodiment, the consent information storage control unit 531 causes the server storage unit 52 to store the consent period information regarding a period in which the user of the vehicle 2 has given consent to providing the data to the outside. In particular, the consent information storage control unit 531 causes the server storage unit 52 to store the consent period information based on the consent information for each vehicle and each user.

Specifically, in the present embodiment, based on the information related to the consent transmitted from the information management unit 332 of each of the vehicles 2, every time a consent state of the user of the vehicle 2 changes, the change in the consent state is stored as synchronous period information. For example, when the information related to the consent received from the vehicle 2 changes from information representing the consenting state to information representing non-consent or vice versa, the consent information storage control unit 531 causes the server storage unit 52 to store the change in the consent state as the synchronous period information.

FIG. 6 is an example of the consent period information stored in the server storage unit 52 by the consent information storage control unit 531. As illustrated in FIG. 6, in the present embodiment, the consent period information includes identification information of the vehicle 2 (vehicle ID), time, and the change in the consent state. As a result, it is possible to ascertain, from the consent period information, the period in which the user of each of the vehicles 2 has given consent to providing the data to the outside, and the period in which the user has not given the consent.

The consent period information may be information stored in any form as long as it is possible to ascertain the period in which the user of each of the vehicles 2 has given consent to providing the data to the outside, and the period in which the user has not given the consent. Therefore, the consent period information may be, for example, information including a start time and an end time of the period in which the user of the vehicle 2 has given consent to providing the data to the outside, and a start time and an end time of the period in which the user of the vehicle 2 has not given consent to providing the data to the outside.

The data request unit 532 transmits the data read request signal to each of the vehicles 2 when a predetermined data read condition is satisfied. The data read condition is, for example, a condition that is satisfied periodically (for example, at regular time intervals). As a result, the server 5 can periodically receive, from each of the vehicles 2, the data acquired in the vehicle 2.

The data read condition may be, for example, a condition that is satisfied when a predetermined incident has occurred in the vehicle 2. Specifically, the data read condition may be a condition that is satisfied when a signal indicating that an incident has occurred is received from the vehicle 2. In this case, when a predetermined incident has occurred, the ECU 30 of each of the vehicles 2 transmits the signal indicating that the incident has occurred to the server 5. By transmitting data every time an incident occurs in this manner, data required by the server 5 can be promptly provided to the server 5. Alternatively, the data request unit 532 transmits the data read request signal to each of the vehicles 2 when an analyst operates the input device of the server 5, for example, in a case where data is necessary for the analyst to analyze the driving of the vehicle 2 or the like.

In the present embodiment, the data read request signal includes information on the type of data requested to be read. For example, the data read request signal includes information representing a request to read data related to a specific incident. Therefore, for example, the data request unit 532 transmits the data read request signal when the incident of sudden braking has occurred, and in this case, for example, the data transmission unit 334 of the vehicle 2 transmits the time data in the accumulated data whose data IDs are 2 and 3 to the server 5 in the example illustrated in FIG. 4.

### Transmission control unit

The transmission control unit 533 controls transmission of data acquired previously in the vehicle 2 to the server 5. Specifically, in the present embodiment, the transmission control unit 533 transmits, to the vehicle 2, a signal for instructing to transmit specific data in a designated form among the accumulated data generated by the sensor 10 in the vehicle 2 and stored in the vehicle storage unit 32.

In the present embodiment, the transmission control unit 533 refers to the information received from the vehicle 2, and controls the transmission of the data to the server 5 based on whether or not the user (driver or occupant) of the vehicle 2 has given consent to providing the data to the outside of the vehicle 2 at the time of acquiring the data in the vehicle 2. In this way, by controlling transmission to the server 5 based on whether or not the user has given consent to providing the data to the outside at the time of acquiring the data, provision of past data to the outside when the user does not give consent to providing the data to the outside is suppressed. If the past data when the user has not given consent to providing the data to the outside is provided to the outside of the vehicle 2, the user prohibits provision of all the past data to the outside of the vehicle 2 in order to prevent provision of the past data. However, controlling the transmission to the server 5 based on the consent state at the time of acquiring the data restrains the user from prohibiting provision of all the past data to the outside of the vehicle 2 even in a case where the user thinks that some of the past data may be provided to the outside of the vehicle 2.

In the present embodiment, the transmission control unit 533 controls the transmission of the data acquired in the vehicle 2 to the server 5 based on the consent information stored in the server storage unit 52. Thus, the server 5 can control the transmission of the data acquired in the vehicle 2 to the server 5 based on the information stored in the server storage unit 52. In particular, in the present embodiment, the transmission control unit 533 controls the transmission of data to the server 5 based on the consent period information and data representing a time when each data has been acquired. Since the volume of the consent period information and the data representing the time when each data has been acquired is relatively small, the transmission of the data acquired in the vehicle 2 to the server 5 can be controlled only by receiving the minimum data from the vehicle 2.

Specifically, in the present embodiment, when it is determined that the user of the vehicle 2 has not given consent to providing the data to the outside at the time of acquiring the data in the vehicle 2, the transmission control unit 533 does not transmit regulated data which is a part of the data to the server 5. Therefore, in the present embodiment, in such a case, the transmission control unit 533 transmits data other than the regulated data among the data to the server 5. On the other hand, when it is determined that the user of the vehicle 2 has given consent to providing the data to the outside at the time of acquiring the data in the vehicle 2, the transmission control unit 533 transmits all of the data (including the regulated data) to the server 5.

Here, in the present embodiment, the regulated data includes privacy information on the user of the vehicle 2 or a person around the vehicle 2 at the time of the data being acquired. On the other hand, in the present embodiment, the data other than the regulated data does not include the privacy information.

Therefore, the regulated data includes, for example, data including the identification information on the vehicle 2 (for example, a vehicle identification number (VIN)). The data including the identification information on the vehicle 2 is stored in the vehicle storage unit 32 at the time of manufacturing or registration of the vehicle 2. Furthermore, the regulated data includes, for example, data representing images captured by the vehicle exterior camera 11 and the vehicle interior camera 12. This is because the data of the images captured by the vehicle exterior camera 11 includes the privacy information on the user of the vehicle 2 and a person around the vehicle 2, and the data of the images captured by the vehicle interior camera 12 includes the privacy information on the user of the vehicle 2.

In the present embodiment, the regulated data includes data representing the own position of the vehicle 2 measured by the positioning sensor 14. This is because the data representing the own position of the vehicle 2 indicates an action history of the user of the vehicle 2 and includes the privacy information. In addition, in the present embodiment, the regulated data includes the data representing the voice detected by the microphone 15. This is because the data detected by the microphone 15 includes the privacy information on the user of the vehicle 2.

On the other hand, in the present embodiment, the regulated data does not include the data representing the traveling state of the vehicle 2 detected by the traveling state sensor 16. This is because the data representing the traveling state of the vehicle 2 does not lead to identification of an individual, and thus does not include the privacy information on the user of the vehicle 2. In addition, the regulated data does not include the data representing the operation status of the operation device detected by the driver operation sensor 17. This is because the data representing the operation status of the operation device does not lead to identification of an individual, and thus does not include the privacy information on the user of the vehicle 2. Furthermore, in the present embodiment, the regulated data does not include data representing a distance to a surrounding object detected by the distance measuring sensor 13. This is because the data representing the distance does not lead to identification of an individual, and thus does not include the privacy information on the user of the vehicle 2 and a person around the vehicle 2.

As described above, in the present embodiment, when the user of the vehicle 2 has not given consent to providing the data to the outside at the time of the data being acquired by the vehicle 2, the regulated data among the data is not transmitted to the server 5, and when the user of the vehicle 2 has given consent to providing the data to the outside, all of the data is transmitted to the server 5. This suppresses provision of the regulated data to the outside among the past data when the user has not given consent to providing the data to the outside. In addition, since the past data when the user has given consent to providing the data to the outside is provided to the outside including the regulated data, the provision of the data to the outside is prevented from being unnecessarily limited. In particular, in the present embodiment, when the user of the vehicle 2 has not given consent to providing the data to the outside, the transmission of the regulated data including the privacy information is stopped. This suppresses provision of the privacy information to the server 5 without the user's consent.

In the present embodiment, the regulated data includes the privacy information, and data other than the regulated data does not include the privacy information. However, the regulated data may have a privacy level higher than a predetermined level. Therefore, for example, the data including the identification information on the vehicle 2, and the data representing an image may be treated as the regulated data, and the data representing the own position of the vehicle 2 may not be treated as the regulated data. In any case, the regulated data includes at least one of the data including the identification information on the vehicle 2, the data representing images generated by the vehicle exterior camera 11 and the vehicle interior camera 12, the data representing the own position of the vehicle 2 generated by the positioning sensor 14, or the data representing a voice generated by the microphone 15. The regulated data does not include at least either a plurality of pieces of data representing the traveling state of the vehicle 2 or a plurality of pieces of data representing the operating status of the operation device.

Alternatively, the regulated data may be selected independently of the privacy information. All data detected by the sensor 10 of the vehicle 2 may be treated as the regulated data.

In addition, in the present embodiment, the transmission control unit 533 controls transmission of data acquired previously to the server 5 when the data read condition from the vehicle 2 is satisfied. In the present embodiment, for data for which the user of the vehicle 2 has not given consent to providing the data to the outside at the time of data acquisition, the transmission control unit 533 transmits only data other than the regulated data to the server 5 without transmitting the regulated data to the server 5 when the data read condition from the vehicle 2 is satisfied. On the other hand, for data indicating that the user of the vehicle 2 gives consent to providing the data to the outside at the time of data acquisition, when the data read condition from the vehicle 2 is satisfied, the transmission control unit 533 transmits all of the data (including the regulated data) to the server 5.

More specifically, in the present embodiment, as described above, when the data read condition from the vehicle 2 is satisfied, the data request unit 532 transmits a data read request signal to each of the vehicles 2. Then, when the data transmission unit 334 of the vehicle 2 receives the data read request signal from the server 5, the data transmission unit 334 transmits, to the server 5, data representing the time at which each of a plurality of pieces of accumulated data stored in the vehicle storage unit 32 has been acquired, as described above. The transmission control unit 533 determines whether or not the user of the vehicle 2 has given consent to providing the data to the outside at the time of acquiring the data in the vehicle based on the time data received in this manner and the synchronous period information stored in the server storage unit 52. Then, the transmission control unit 533 controls the transmission of the data acquired previously in the vehicle 2 to the server 5 based on the determination result. As a result, the transmission control unit 533 controls transmission of data acquired previously to the server 5 when the data read condition from the vehicle 2 is satisfied.

In the present embodiment, when a given data read condition is satisfied, data is provided to the outside. Therefore, after a certain amount of data is stored in the vehicle storage unit 32 of the vehicle 2, the data is collectively transmitted. Thus, since the server 5 collectively receives the data, the data can be easily organized in the server 5.

### Data storage control unit

The data storage control unit 534 controls storage of data received from the vehicle 2 in the server storage unit 52. In the present embodiment, when the data storage control unit 534 receives data generated by the sensor 10 from each of the vehicles 2, the data storage control unit 534 stores the received data in the server storage unit 52. These pieces of data stored in the server storage unit 52 are used as the teaching data for automatic driving, or used to analyze driving of a large number of vehicles 2.

### Flow of processing

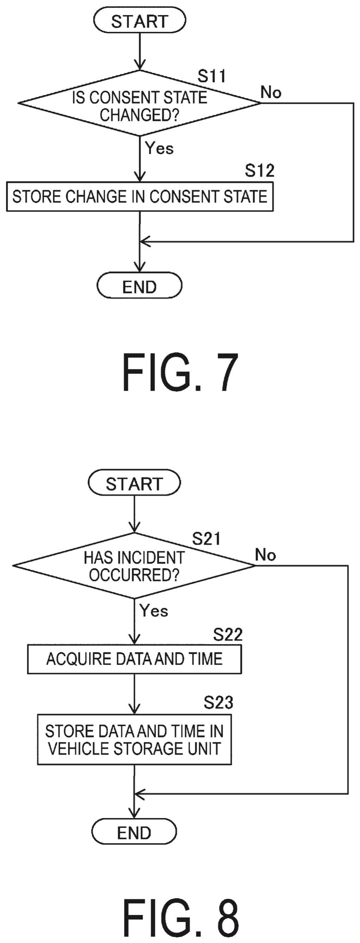

Next, a flow of processing executed by the vehicle processor 33 or the server processor 53 will be described with reference to FIGS. 7 to 10. First, change notification processing for notifying the server 5 of the change in the consent state will be described. FIG. 7 is a flowchart illustrating a flow of the change notification processing. The change notification processing illustrated in FIG. 7 is executed by the vehicle processor 33 at regular time intervals.

As illustrated in FIG. 7, in the change notification processing, first, the information management unit 332 determines whether or not the consent state of the user of the vehicle 2 has changed (step S11). As described above, the change in the consent state of the user of the vehicle 2 is determined based on an input through an input device and the like. When it is determined in step S11 that the consent state of the user has not changed, the change notification processing is terminated. On the other hand, when it is determined in step S11 that the consent state of the user has changed, information indicating the change in the consent state is transmitted to the server 5 (step S12). As a result, the consent period information as illustrated in FIG. 6 is stored in the server storage unit 52.

Next, vehicle storage processing for storing the data generated by the sensor 10 of the vehicle 2 in the vehicle storage unit 32 will be described. FIG. 8 is a flowchart illustrating a flow of the vehicle storage processing. The storage processing illustrated in FIG. 8 is executed by the vehicle processor 33 at regular time intervals.

As illustrated in FIG. 8, in the vehicle storage processing, first, the vehicle storage control unit 333 determines whether or not a predetermined incident has occurred based on, for example, the speed, the acceleration, a change rate of the steering angle, and the like of the vehicle 2 detected by the traveling state sensor 16 (step S21). When it is determined in step S21 that the predetermined incident has not occurred, the vehicle storage processing is terminated.

On the other hand, when it is determined in step S21 that the predetermined incident has occurred, the vehicle storage control unit 333 acquires the data generated in each of the sensors 10 and a current time (step S22). The vehicle storage control unit 333 may acquire the data having been generated by the sensor 10 before the current time in addition to the data currently generated by the sensor 10 in step S22 by normally storing the data generated by the sensor 10 in the vehicle storage unit 32 for a certain temporary period of time.

Next, the vehicle storage control unit 333 stores, as one piece of accumulated data, the data and the current time acquired in step S22 in the vehicle storage unit 32 (step S23). As a result, the accumulated data as illustrated in FIG. 4 is stored in the vehicle storage unit 32.

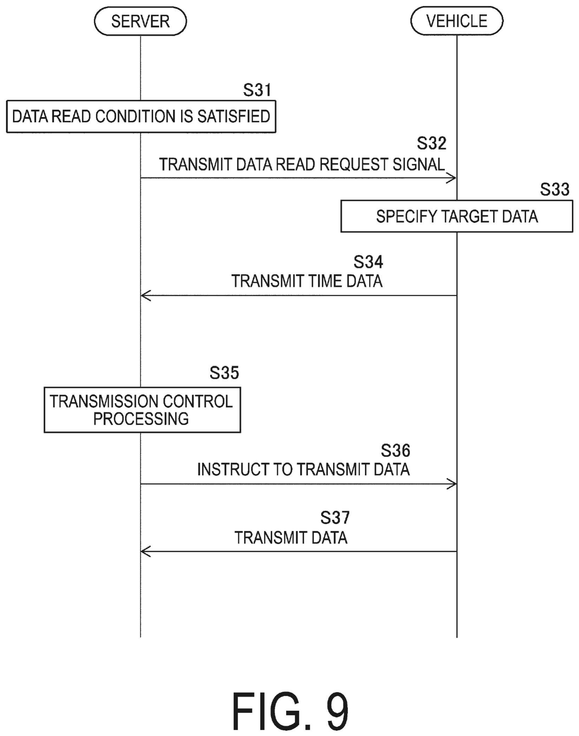

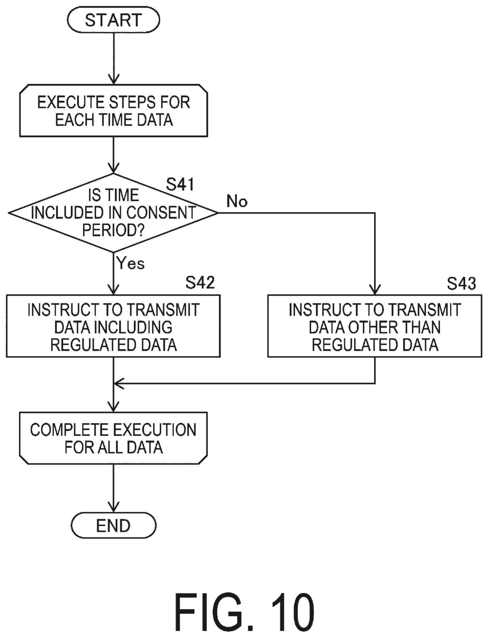

Next, communication between the vehicle 2 and the server 5 regarding the transmission of the data acquired in the vehicle 2, and operations of the vehicle 2 and the server 5 related to this communication will be described with reference to FIGS. 9 and 10. FIG. 9 is an operation sequence diagram related to communication between the vehicle 2 and the server 5.

In the example illustrated in FIG. 9, first, when a given data read condition is satisfied, the data request unit 532 of the server 5 determines that the data read condition is satisfied (step S31), and transmits the data read request signal to the vehicle 2 (step S32). The data read request signal includes information representing a request to read data related to a specific incident.

When the vehicle 2 receives the data read request signal from the server 5, the data transmission unit 334 of the vehicle 2 specifies data corresponding to the request included in the data read request signal (step S33). For example, when the data read request signal includes information representing a request to read data related to a specific incident, the data transmission unit 334 specifies the data related to the specific incident as the target accumulated data whose time data is to be transmitted. Specifically, for example, when the data read request signal at the time of occurrence of the incident of sudden braking is received, the data transmission unit 334 specifies, for example, the accumulated data whose data IDs are 2 and 3 in the example illustrated in FIG. 4 as target data. Next, the data transmission unit 334 transmits the time data of each specified accumulated data to the server 5 (step S34).

When the server 5 receives the time data of each accumulated data, the transmission control unit 533 of the server 5 executes transmission control processing for controlling the transmission of the data acquired previously in the vehicle 2 to the server 5 (step S35). In the present embodiment, based on the time data received and the synchronous period information stored in the server storage unit 52, the transmission control unit 533 determines whether or not the user of the vehicle 2 has given consent to providing the data to the outside at the time of acquiring each accumulated data corresponding to each time data. Then, the transmission control unit 533 transmits, to the vehicle 2, a signal for instructing to transmit the accumulated data, for which it is determined that the user has given consent to providing the data to the outside, to the server 5.

FIG. 10 is a flowchart illustrating a flow of the transmission control processing. Steps S41 to S43 are executed for each time data received.

First, the transmission control unit 533 determines, for one of the plurality of pieces of time data received in step S34, whether or not the time represented by the time data is included in the period in which the user has given consent to providing the data to the outside (step S41). Specifically, the transmission control unit 533 determines whether or not the user has given the consent based on the time data and the consent period information stored in the vehicle storage unit 32. For example, in the example illustrated in FIGS. 4 and 6, since the time data of the accumulated data whose data ID is 2 indicates that the time is included in a period in which the consent state is non-consent, the time represented by the time data is determined to be included in a non-consent period.

When it is determined in step S41 that the time represented by the time data is included in the period in which the user has given consent to providing the data to the outside, the transmission control unit 533 instructs to transmit all the accumulated data (including the regulated data) corresponding to the time data to the server 5 (step S42). On the other hand, when it is determined in step S41 that the time represented by the time data is not included in the period in which the user has given consent to providing the data to the outside, the transmission control unit 533 instructs to transmit data other than the regulated data among the accumulated data corresponding to the time data to the server 5 (step S43). Thereafter, when the processing in steps S41 to S43 is executed for all of the time data received in step S34, the transmission processing is terminated. In step S43, the transmission control unit 533 instructs to transmit data other than the regulated data among the target accumulated data to the server 5; however, the transmission control unit 533 may instruct not to transmit the corresponding accumulated data to the server at all.

When the transmission control processing is executed in the server 5 in this manner, a signal for instructing to transmit data is transmitted from the transmission control unit 533 to the vehicle 2 (step S36). When the data transmission unit 334 of the vehicle 2 receives the signal for instructing to transmit data, the data transmission unit 334 transmits the accumulated data stored in the vehicle storage unit 32 to the server 5 according to the signal (step S37).

### Modified example

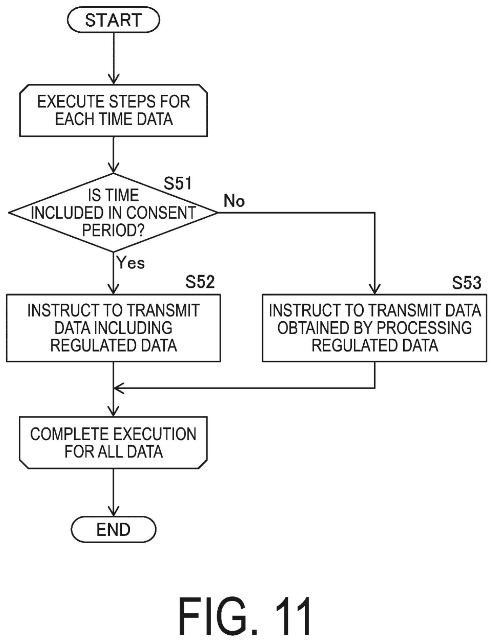

Next, a modified example of the first embodiment will be described with reference to FIG. 11. In the first embodiment described above, when it is determined that the user of the vehicle 2 has not given consent to providing the data to the outside at the time of acquiring the data based on the consent information, the transmission control unit 533 does not transmit the regulated data among the data acquired previously in the vehicle 2, but transmits data other than the regulated data.

On the other hand, in the present modified example, when it is determined that the user of the vehicle 2 has not given consent to providing the data to the outside at the time of acquiring the data based on the consent information, the transmission control unit 533 processes the regulated data to reduce its information accuracy and then transmits the regulated data to the server 5, and transmits the data other than the regulated data to the server 5 as it is without being processed.

The processing to reduce the information accuracy includes anonymizing the privacy information included in the regulated data. For example, the processing to reduce the information accuracy for data representing an image and generated by the vehicle exterior camera 11 includes reducing the resolution of the image and applying mosaic to a character or person image so that characters on a number plate included in the image cannot be identified or a person included in the image cannot be identified. Further, the processing to reduce the information accuracy for data representing an image generated by the vehicle interior camera 12 includes reducing the resolution of the image and applying mosaic to an occupant image so that the occupant included in the image cannot be identified. The processing to reduce the information accuracy for data representing a voice generated by the microphone 15 includes processing the voice so that the occupant who has uttered the voice cannot be identified. In addition, the processing to reduce the information accuracy for data representing the own position of the vehicle 2 generated by the positioning sensor 14 includes expanding a range in which the vehicle 2 may be located such that a specific own position of the vehicle 2 cannot be identified.

Performing the processing to reduce the information accuracy in this manner, and then transmitting the data to the server 5, makes it possible to provide the minimum necessary data to be used for analysis of driving of the vehicle 2 and the like, while protecting the privacy of the user who has not given consent to providing the data to the outside.

FIG. 11 is a flowchart similar to FIG. 10, illustrating the flow of the transmission control processing according to the present modified example. Steps S51 and S52 in FIG. 11 are similar to steps S41 and S42 in FIG. 10, and thus description thereof is omitted.

When it is determined in step S51 that the time represented by the time data is not included in the period in which the user has given consent to providing the data to the outside, the transmission control unit 533 instructs to transmit data obtained by processing the regulated data among the accumulated data corresponding to the time data to the server 5 (step S53). In addition, the transmission control unit 533 instructs to transmit data other than the regulated data to the server 5 as it is without processing the data.

### Second Embodiment

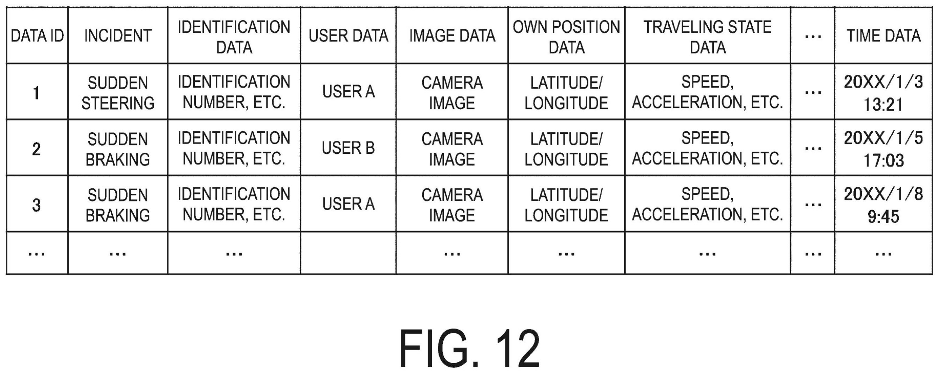

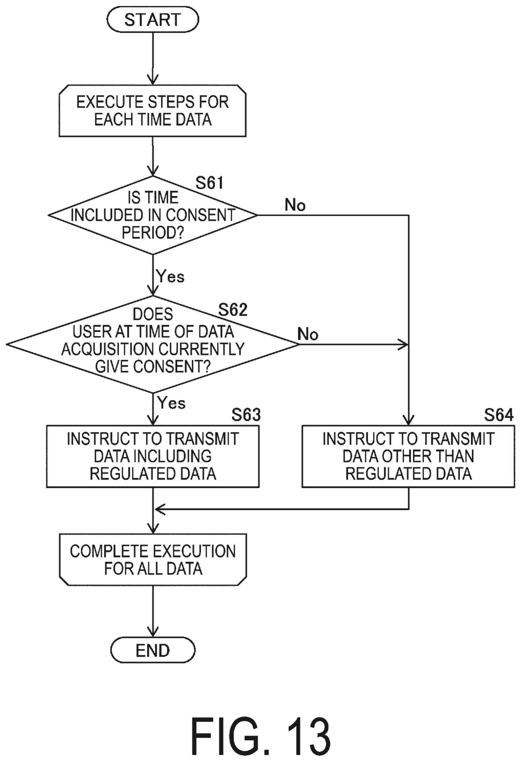

Next, a data collection system 1 according to a second embodiment will be described with reference to FIGS. 12 and 13. The configuration and operation of the data collection system 1 according to the second embodiment are basically the same as the configuration and operation of the data collection system 1 according to the first embodiment. Hereinafter, portions different from the data collection system 1 according to the first embodiment will be mainly described.

In the first embodiment, the transmission control unit 533 controls transmission of the data acquired previously to the server 5 based on whether or not the user of the vehicle 2 has given consent to providing the data to the outside at the time of acquiring the data. In the present embodiment, the transmission control unit 533 controls transmission of the data acquired previously to the server 5 based on whether or not the user of the vehicle 2 gives consent to providing the data to the outside when the data read condition is satisfied in addition to at the time of acquiring the data. As described above, the transmission of the data to the server 5 is controlled based on the consent state of the user at the time of acquiring the data, and based on the consent state at the time of providing the data to the outside, whereby the transmission of the data including the privacy information to the outside of the vehicle 2 can be determined more carefully.

More specifically, also in the present embodiment, when it is determined that the user of the vehicle 2 has not given consent to providing the data to the outside at the time of acquiring the data based on the consent period information and the data representing the time when each data has been acquired, the transmission control unit 533 does not transmit the regulated data which is a part of the data to the server 5. Therefore, in the present embodiment, in such a case, the transmission control unit 533 transmits data other than the regulated data among the target data to the server 5.

On the other hand, in the present embodiment, even in a case where it is determined that the user of the vehicle 2 has given consent to providing the data to the outside at the time of acquiring the data based on the consent period information and the data representing the time when each data has been acquired, when it is determined that the user of the vehicle 2 has not given consent to providing the data to the outside when the data read condition is satisfied based on the consent period information, the transmission control unit 533 does not transmit the regulated data which is a part of the data to the server 5. Therefore, in the present embodiment, even in such a case, the transmission control unit 533 transmits data other than the regulated data among the target data to the server 5.

In the present embodiment, in a case where it is determined that the user of the vehicle 2 has given consent to providing the data to the outside at the time of acquiring the data based on the consent period information and the data representing the time when each data has been acquired, and it is determined that the user of the vehicle 2 gives consent to providing the data to the outside when the data read condition is satisfied based on the consent period information, the transmission control unit 533 transmits all of the data (including the regulated data) to the server 5.

As described above, the transmission of the regulated data to the server 5 is controlled according to whether or not the user gives consent to providing the data to the outside when the data read condition is satisfied, whereby even though the user gives consent to providing the data to the outside at the time of acquiring the data, when the user then changes his/her mind and does not give consent to providing the data to the outside, the transmission of the data to the server 5 is suppressed.

In particular, in the present embodiment, the presence or absence of the consent is determined for each user. Therefore, the transmission control unit 533 determines whether or not the user at the time of acquiring the data gives consent to providing the data to the outside also when the data read condition is satisfied.

Thus, in the present embodiment, in addition to the data acquired in the vehicle 2, the vehicle storage control unit 333 stores data on the user of the vehicle 2 at the time of acquiring the data in the vehicle storage unit 32. In particular, in the present embodiment, the vehicle storage control unit 333 stores, in the vehicle storage unit 32, data on the current driver identified by the driver identification unit 331 as the user of the vehicle 2 at the time of acquiring the data or information on the current driver. The information on the current driver may be the feature amount extracted from a facial image of the driver as described above.

FIG. 12 is a diagram similar to FIG. 4, illustrating an example of the accumulated data stored in the vehicle storage unit 32 by the vehicle storage control unit 333 in the present embodiment. As illustrated in FIG. 12, in the present embodiment, each accumulated data stored in association with each data ID includes the user data for the user of the vehicle 2 in addition to each data illustrated in FIG. 4.

When the data transmission unit 334 of the vehicle 2 transmits data representing time for each accumulated data to the server 5 in response to the data read signal from the server 5, the data transmission unit 334 also transmits driver information of the accumulated data.

In a case where the transmission control unit 533 of the server 5 determines that the user represented by the user data corresponding to each accumulated data currently gives consent to providing the data to the outside based on the consent period information when the transmission control unit 533 receives the data representing the time for each accumulated data, the transmission control unit instructs to transmit the accumulated data to the server 5 according to the consent state at the time of data acquisition. On the other hand, in a case where the transmission control unit 533 determines that the user represented by the user data corresponding to each accumulated data does not currently give consent to providing the data to the outside based on the consent period information when the transmission control unit 533 receives the data representing the time for each accumulated data, the transmission control unit 533 does not instruct to transmit the regulated data of the accumulated data to the server 5.

Since the presence or absence of the consent is determined for each user in this manner, when a user different from the user at the time of acquiring the data gives consent to providing the data to the outside when the data read condition is satisfied, the provision of the data to the server 5 is suppressed.

FIG. 13 is a flowchart similar to FIG. 10, illustrating a flow of transmission control processing according to the present embodiment. Steps S61, S63, and S64 in FIG. 13 are similar to steps S41 to S43 in FIG. 10, and thus description thereof is omitted.

When it is determined in step S61 that the time represented by the time data is included in the period in which the user has given consent to providing the data to the outside, the transmission control unit 533 determines whether or not the user at the time of acquiring the accumulated data corresponding to the time data currently gives consent to providing the data to the outside (step S62). Whether or not the user currently gives consent to providing the data to the outside is determined based on the consent period information. When it is determined in step S62 that the user currently gives consent to providing the data to the outside, the transmission control unit 533 instructs to transmit all the accumulated data (including the regulated data) corresponding to the time data to the server 5 (step S63). On the other hand, when it is determined in step S62 that the user does not currently give consent to providing the data to the outside, the transmission control unit 533 instructs to transmit data other than the regulated data among the accumulated data corresponding to the time data to the server 5 (step S64).

### Modified example

Next, a modified example of the second embodiment will be described. In the modified example of the second embodiment, similarly to the modified example of the first embodiment, when it is determined that the user of the vehicle 2 has not given consent to providing the data to the outside at the time of acquiring the data, the transmission control unit 533 processes the regulated data to reduce its information accuracy and then transmits the regulated data to the server 5, and transmits the data other than the regulated data to the server 5 as it is without being processed.

In addition, in the present modified example, even in a case where it is determined that the user of the vehicle 2 has given consent to providing the data to the outside at the time of acquiring the data, when it is determined that the user of the vehicle 2 does not give consent to providing the data to the outside when the data read condition is satisfied based on the consent period information, the transmission control unit 533 processes the regulated data to reduce its information accuracy and then transmits the regulated data to the server 5, and transmits the data other than the regulated data to the server 5 as it is without being processed.

Performing the processing to reduce the information accuracy in this manner, and then transmitting the data to the server 5, makes it possible to provide the minimum necessary data used for analysis of driving of the vehicle 2 and the like, while protecting the privacy of the user who has not given consent to providing the data to the outside.

Although the preferred embodiments according to the present disclosure have been described above, the present disclosure is not limited to these embodiments, and various modifications and changes can be made within the scope of the claims.

## Claims

1. A server (5) that can communicate with a vehicle (2), the server (5) comprising a transmission control unit (533) configured to control transmission of data acquired previously in the vehicle (2) from the vehicle (2) to the server (5), based on whether or not a user of the vehicle (2) has given consent to providing data to outside at a time of acquiring the data in the vehicle (2), with reference to information received from the vehicle (2).

2. The server (5) according to claim 1, further comprising a storage control unit (531) configured to cause a storage unit (52) to store consent information indicating whether or not the user of the vehicle (2) has given consent to providing data acquired in the vehicle (2) to outside previously based on the information received from the vehicle (2), wherein
the transmission control unit (533) controls transmission of the data acquired previously in the vehicle (2) from the vehicle (2) to the server (5) based on the consent information.

3. The server (5) according to claim 2, wherein the consent information includes consent period information regarding a period in which the user of the vehicle (2) has given consent to providing data acquired in the vehicle (2) to outside.

4. The server (5) according to any one of claims 1 to 3, wherein the transmission control unit (533) controls transmission of the data acquired previously in the vehicle (2) from the vehicle (2) to the server (5) when a data read condition from the vehicle (2) is satisfied.

5. The server (5) according to claim 4, wherein the transmission control unit (533) controls transmission of the data from the vehicle (2) to the server (5), based on whether or not the user of the vehicle (2) gives consent to providing data to outside when the data read condition is satisfied, in addition to whether or not the user of the vehicle (2) has given consent to providing data to outside at a time of acquiring the data in the vehicle (2).

6. The server (5) according to any one of claims 1 to 5, wherein when the user of the vehicle (2) has not given consent to providing data to outside at a time of acquiring the data, the transmission control unit (533) does not transmit regulated data from the vehicle (2) to the server (5), the regulated data being at least a part of the data.

7. The server (5) according to any one of claims 1 to 5, wherein when the user of the vehicle (2) has not given consent to providing data to outside at a time of acquiring the data, the transmission control unit (533) processes regulated data to reduce its information accuracy and then transmits the regulated data from the vehicle (2) to the server (5), the regulated data being at least a part of the data.

8. The server (5) according to claim 6 or 7, wherein when the user of the vehicle (2) has given consent to providing data to outside at a time of acquiring the data, the transmission control unit (533) transmits the data including the regulated data from the vehicle (2) to the server (5).

9. The server (5) according to claim 6 or 7, wherein even though the user of the vehicle (2) has given consent to providing data to outside at a time of acquiring the data, when the user of the vehicle (2) does not give consent to providing data to outside when a data read condition from the vehicle (2) is satisfied, the transmission control unit (533) does not transmit the regulated data from the vehicle (2) to the server (5).

10. The server (5) according to claim 6 or 7, wherein even though the user of the vehicle (2) has given consent to providing data to outside at a time of acquiring the data, when the user of the vehicle (2) does not give consent to providing data to outside when a data read condition from the vehicle (2) is satisfied, the transmission control unit (533) processes the regulated data to reduce its information accuracy and then transmits the regulated data from the vehicle (2) to the server (5).

11. The server (5) according to claim 9 or 10, wherein when the user of the vehicle (2) gives consent to providing data to outside at a time of acquiring the data and the user of the vehicle (2) gives consent to providing data to outside when the data read condition from the vehicle (2) is satisfied, the transmission control unit (533) transmits the data including the regulated data from the vehicle (2) to the server (5).

12. The server (5) according to claim 7 or 10, wherein the processing to reduce the information accuracy includes anonymizing privacy information included in the regulated data.

13. A system comprising:
the server (5) according to any one of claims 1 to 12; and
a vehicle (2) that can communicate with the server (5), wherein
the vehicle (2) includes an information management unit configured to transmit, to the server (5), information on whether or not a user of the vehicle (2) gives consent to providing data to outside.

14. An information processing method to be implemented in a server (5) that can communicate with a vehicle (2), the method comprising controlling transmission of data acquired previously in the vehicle (2) from the vehicle (2) to the server (5) based on whether or not a user of the vehicle (2) has given consent to providing data to outside at a time of acquiring the data in the vehicle (2), with reference to information received from the vehicle (2).

15. A computer program to be executed in a server (5) that can communicate with a vehicle (2), the program being configured to cause a computer of the server (5) to: control transmission of data acquired previously in the vehicle (2) from the vehicle (2) to the server (5) based on whether or not a user of the vehicle (2) has given consent to providing data to outside at a time of acquiring the data in the vehicle (2), with reference to information received from the vehicle (2).
